# DEMANDE DE BREVET EUROPEEN

(11) **EP 4 840 664 A1**
(43) Date de publication de la demande: **18.11.2026**
(21) Numéro de dépôt: 26176763.6
(22) Date de dépôt: 06.05.2026
(51) Int. Cl.: B60K 11/06, B60K 1/00, B60K 11/04, B60K 11/08

(54) **AGENCEMENT POUR VÉHICULE COMPRENANT UN SYSTÈME DE GESTION THERMIQUE COMPRENANT UN MODULE D'INTERCONNEXION DÉVIANT UN FLUX D'AIR PROVENANT D'UNE FACE AVANT DU VÉHICULE**

(30) Priorité: 13.05.2025 FR 2505048
(71) Demandeur: RENAULT s.a.s., 92100 Boulogne-Billancourt (FR)
(72) Inventeur: KIM, Dahye, 78280 GUYANCOURT (FR); LAURENT, Patrick, 78280 GUYANCOURT (FR); PAROLINI, Pascal, 78280 GUYANCOURT (FR)
(74) Mandataire: Renault Group

(57) **Abrégé**

L'invention porte sur un agencement (2) destiné à être implanté au sein d'un compartiment moteur avant d'un véhicule (1) comprenant une face avant, l'agencement (2) comprenant un système de gestion thermique apte à chauffer et/ou à refroidir une batterie de traction et/ou de propulsion, et/ou un habitacle d'un tel véhicule, et/ou un train de puissance électrique, et/ou un moteur à combustion interne, le système de gestion thermique comprenant un module d'interconnexion et au moins un radiateur agencé au niveau d'une telle face avant, le module d'interconnexion ayant une forme sensiblement parallélépipédique, le module d'interconnexion s'étendant principalement selon les directions transversale et verticale de sorte à faire écran au flux d'air (F) ayant traversé l'au moins un radiateur et/ou venant d'une telle face avant.

## Description

### Domaine technique de l'invention

L'invention concerne un agencement comprenant un système de gestion thermique apte à chauffer et/ou à refroidir une batterie de traction et/ou de propulsion, et/ou un habitacle d'un tel véhicule, et/ou un train de puissance électrique, et/ou un moteur à combustion interne, le système de gestion thermique comprenant un module d'interconnexion et au moins un radiateur, le module d'interconnexion étant agencé de sorte à faire écran au flux d'air traversant l'au moins un radiateur. L'invention porte encore sur un véhicule comprenant un tel agencement.

### Etat de la technique antérieure

Un véhicule, en particulier un véhicule automobile, comprend généralement un système de gestion thermique pour le chauffage et/ou le refroidissement d'une batterie de traction et/ou de propulsion, et/ou d'un habitacle, et/ou d'un train de puissance électrique de traction et/ou de propulsion, et/ou d'un moteur à combustion interne équipant un tel véhicule. Un tel système de gestion thermique est généralement volumineux et est par conséquent agencé au sein d'un compartiment moteur disposé à l'avant d'un tel véhicule. Un tel système de gestion thermique comprend généralement au moins un radiateur agencé en face avant d'un tel véhicule.

Seulement, des flux d'air engendrés par le déplacement en marche avant d'un tel véhicule ont des répercussions sur un tel système de gestion thermique. En effet, de tels flux d'air traversent notamment un tel radiateur et/ou contournent éventuellement un tel radiateur. Ainsi, de tels flux d'air participent à un refroidissement du système de gestion thermique, notamment par temps froid, alors qu'une consigne de chauffage de l'habitacle ou de réchauffage d'un ou plusieurs éléments est demandée. Alternativement, de tels flux d'air participent à un réchauffage du système de gestion thermique, notamment par temps très chaud, alors qu'une consigne de refroidissement d'un ou plusieurs éléments ou de climatisation de l'habitacle est demandée.

En particulier par temps froid et en cas de véhicule électrique, le système de gestion thermique se trouve refroidi par de tels flux d'air au cours du roulage du véhicule alors que l'habitacle a notamment besoin d'être chauffé. Dans de telles conditions, le système de gestion thermique puise de l'énergie électrique depuis la batterie de traction et/ou de propulsion pour alimenter un dispositif de chauffage électrique de l'habitacle. Il en découle une consommation excessive d'énergie électrique et par conséquent une baisse de l'autonomie d'un tel véhicule électrique.

Une telle situation n'est pas optimale.

### Présentation de l'invention

Le but de l'invention est de proposer un agencement remédiant aux inconvénients cités précédemment. Notamment, la solution porte sur un agencement comprenant un module d'interconnexion, le module d'interconnexion étant agencé de sorte à faire écran, dévier, des flux d'air venant de la face avant d'un tel véhicule.

### Résumé de l'invention

Pour atteindre cet objectif, l'invention porte sur un agencement destiné à être implanté au sein d'un compartiment moteur avant d'un véhicule comprenant une face avant, l'agencement comprenant un système de gestion thermique apte à chauffer et/ou à refroidir :
- une batterie de traction et/ou de propulsion, et/ou
- un habitacle d'un tel véhicule, et/ou
- un train de puissance électrique, et/ou
- un moteur à combustion interne,

le système de gestion thermique comprenant un module d'interconnexion et au moins un radiateur agencé au niveau d'une telle face avant, le module d'interconnexion ayant une forme sensiblement parallélépipédique,
le module d'interconnexion s'étendant principalement selon les directions transversale et verticale de sorte à faire écran au flux d'air ayant traversé l'au moins un radiateur et/ou venant d'une telle face avant.

L'agencement peut comprendre un support de fixation du module d'interconnexion, le support de fixation pouvant s'étendre principalement selon les directions transversale et verticale de sorte à faire écran au flux d'air.

Le support de fixation du module d'interconnexion peut comprendre au moins un déflecteur d'air s'étendant, ou s'étendant sensiblement, dans un plan vertical et transversal.

L'au moins un déflecteur d'air peut être fixé au support de fixation, notamment par des systèmes vis-écrous.

Le support de fixation peut comprendre un déflecteur d'air gauche s'étendant à gauche du support de fixation et un déflecteur droit s'étendant à droite du support de fixation.

Le déflecteur d'air gauche et le déflecteur d'air droit peuvent être identiques, notamment en étant agencés symétriquement par rapport à un plan médian vertical et longitudinal d'un tel véhicule.

Le support de fixation peut comprendre un déflecteur d'air inférieur s'étendant vers le bas depuis le support de fixation.

Le déflecteur d'air inférieur peut comprendre une encoche non centrée par rapport à un plan médian vertical et longitudinal d'un tel véhicule, l'encoche pouvant être ménagée dans une arête inférieure du déflecteur inférieur et vers le haut, notamment l'encoche pouvant avoir une forme sensiblement rectangulaire.

L'invention porte encore sur un véhicule, notamment un véhicule automobile, comprenant un agencement tel que défini précédemment.

Le véhicule peut comprendre un dispositif de direction pouvant comprendre une colonne de direction agencée à gauche, le déflecteur d'air inférieur étant monté dans un premier sens, notamment de sorte que l'encoche enjambe un élément non centré du dispositif de direction par rapport au plan médian, notamment un élément de type calculateur du dispositif de direction.

Le véhicule peut comprendre un dispositif de direction pouvant comprendre une colonne de direction agencée à droite, le déflecteur d'air inférieur étant monté dans un deuxième sens, notamment de sorte que l'encoche enjambe un élément non centré du dispositif de direction par rapport au plan médian, notamment un élément de type calculateur du dispositif de direction.

### Présentation des figures

Ces objets, caractéristiques et avantages de la présente invention seront exposés en détail dans la description suivante d'un mode de réalisation faite à titre non-limitatif en relation avec les figures jointes parmi lesquelles :
La figure 1 est une vue en coupe schématique partielle selon un plan vertical et longitudinal médian d'un véhicule automobile comprenant un agencement selon un mode de réalisation de l'invention.
La figure 2 est une vue partielle de face du véhicule selon le mode de réalisation de l'invention, le véhicule ayant une colonne de direction à gauche.
La figure 3 est une vue partielle de face du véhicule selon le mode de réalisation de l'invention, le véhicule ayant une colonne de direction à droite.
La figure 4 est une vue de face d'un support de fixation d'un module d'interconnexion et de déflecteurs d'air de l'agencement selon le mode de réalisation de l'invention.
La figure 5 est une vue en perspective du support de fixation, du module d'interconnexion et de déflecteurs d'air de l'agencement selon le mode de réalisation de l'invention.
La figure 6 est une autre vue en perspective du support de fixation, du module d'interconnexion et de déflecteurs d'air de l'agencement selon le mode de réalisation de l'invention.
La figure 7 est une vue de détail de face des déflecteurs d'air de l'agencement selon le mode de réalisation de l'invention.
La figure 8 est une vue en perspective du support de fixation du module d'interconnexion de l'agencement selon le mode de réalisation de l'invention.
La figure 9 est sensiblement une vue de face du module d'interconnexion de l'agencement selon le mode de réalisation de l'invention.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

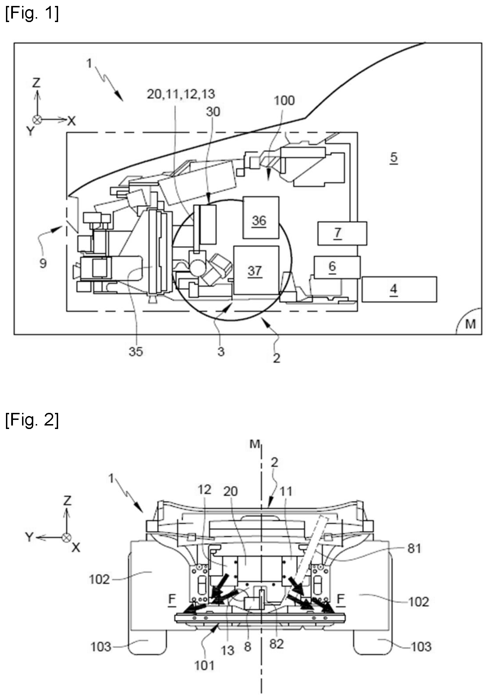

Comme illustré partiellement sur la figure 1, un véhicule 1, de préférence un véhicule automobile, comprend un habitacle 5. Le véhicule 1 comprend un compartiment moteur 100 agencé à l'avant du véhicule, tout du moins un espace 100 permettant de loger des éléments et/ou équipements du véhicule 1. Le véhicule 1 comprend encore un train de puissance électrique 6 comprenant au moins un moteur électrique pour la propulsion et/ou la traction du véhicule 1. Dans ce cas, le véhicule 1 est dit électrique et comprend au moins une batterie 4 de stockage de l'énergie électrique. Alternativement ou en complément, le véhicule 1 comprend au moins un moteur à combustion interne 7 pour la propulsion et/ou la traction du véhicule 1, ou encore pour produire de l'électricité. Le véhicule 1 comprend encore un agencement 2. Le véhicule 1 comprend encore au moins un radiateur 35 agencé au niveau d'une face avant 9 du véhicule 1.

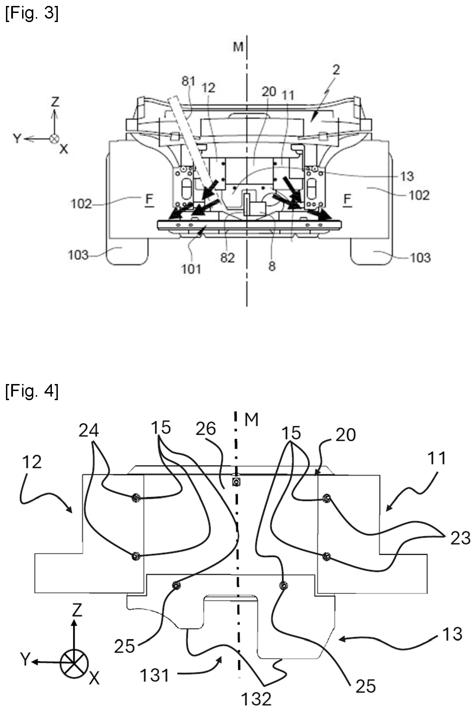

Le véhicule 1 comprend encore un dispositif de direction 8 et des roues avant 103 illustrés notamment sur les figures 2 et 3. Le dispositif de direction 8 est apte à orienter les roues avant 103. Le dispositif de direction 8 comprend une colonne de direction 81. La colonne de direction 81 est agencée à gauche lorsque le véhicule 1 comprend un moyen de commande de la direction, par exemple un volant, agencé à gauche (figure 2). La colonne de direction 81 est agencée à droite lorsque le véhicule 1 comprend un moyen de commande de la direction, par exemple un volant, agencé à droite (figure 3). Le véhicule 1, tout du moins le dispositif de direction 8, comprend un élément 82, par exemple un calculateur. Le véhicule 1 comprend un passage de roue droit 102 enveloppant partiellement la roue avant droite 103 et un passage de roue gauche 102 enveloppant partiellement la roue avant gauche 103.

L'agencement 2, ou le véhicule 1, comprend un système de gestion thermique 3.

Par « système de gestion thermique », on entend un système comprenant des moyens de chauffage, de réchauffage et/ou de refroidissement d'éléments tels que par exemple :
- l'au moins une batterie de traction et/ou de propulsion 4, et/ou
- l'habitacle 5, et/ou
- le train de puissance électrique 6, comprenant éventuellement au moins un moteur électrique, et/ou
- l'au moins un moteur à combustion interne 7.

De préférence, le système de gestion thermique 3 comprend encore un dispositif de chauffage de liquide 36, par exemple à haute tension électrique. De préférence, le système de gestion thermique 3 comprend encore un dispositif 37 utilisant un fluide frigorigène, de préférence du propane, pour assurer les montées de températures et les baisses de températures utiles au système de gestion thermique 3. Bien que le dispositif 37 permette de chauffer et/ou de refroidir le liquide de refroidissement via au moins un échangeur (non illustré), le dispositif 37 est de préférence logé dans un boîtier spécifique eu égard à l'éventuelle dangerosité du fluide frigorigène.

En outre, le système de gestion thermique 3 comprend au moins le radiateur 35 et au moins un module d'interconnexion 30.

Par « module d'interconnexion », on entend un dispositif 30 comprenant au moins une vanne et/ou au moins une électrovanne, et de préférence au moins une pompe à eau et éventuellement au moins un conduit ou une conduite pour la circulation d'un fluide et au moins une pompe pour faire circuler un tel fluide ainsi qu'au moins une entrée et au moins une sortie pour un tel fluide.

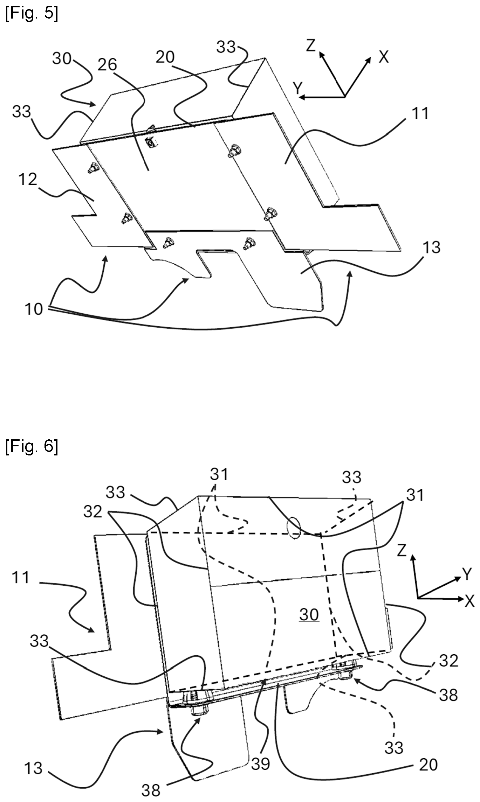

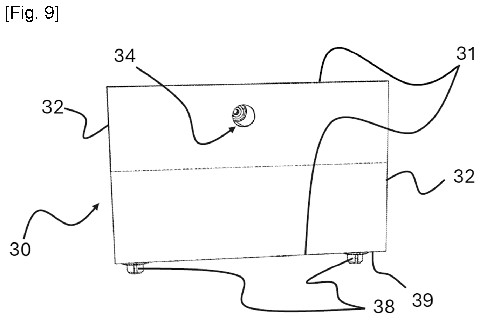

Comme illustré sur les figures 1, 5, 6 et 9, le module d'interconnexion 30 a une forme sensiblement parallélépipédique. Le module d'interconnexion 30 est agencé, disposé, fixé de sorte à s'étendre selon les directions transversale et verticale, tout du moins principalement selon les directions verticale et transversale. Par exemple, comme illustré dans le mode de réalisation illustré, le module d'interconnexion 30 comprend quatre grandes arêtes 31 (figures 6 et 9) s'étendant selon ou sensiblement selon la direction transversale Y. Le module d'interconnexion 30 comprend alors quatre arêtes 32 de taille intermédiaire s'étendant selon ou sensiblement selon la direction verticale Z. Enfin, le module d'interconnexion 30 comprend quatre petites arêtes 33 s'étendant selon ou sensiblement selon la direction longitudinale X, comme illustré sur les figures 5 et 6. Comme illustré sur la figure 1, le module d'interconnexion 30 est agencé derrière une « valise de refroidissement », c'est-à-dire un dispositif d'échange de calories comprenant le radiateur 35.

Le module d'interconnexion 30 de forme parallélépipédique rectangle s'étend de préférence principalement dans un plan vertical et transversal du fait de ses arêtes 31, 32 s'étendant respectivement selon les directions transversale et verticale. L'aire occupée par le module d'interconnexion 30 dans ce plan vertical et transversal fait écran, dévie, redirige, s'oppose, à un ou des flux d'air F ayant traversé le radiateur 35 et/ou venant de la face avant 9. A noter que le mode de réalisation n'utilisant que le module d'interconnexion 30, en particulier sa forme, pour dévier le flux d'air provenant de l'avancée du véhicule 1 en marche avant n'est pas illustré.

Alternativement, le module d'interconnexion 30 ayant cette forme parallélépipédique peut être disposé différemment, par exemple en ayant ses grandes arêtes 31 s'étendant ou s'étendant sensiblement selon la direction verticale Z et ses arêtes intermédiaires 32 s'étendant ou s'étendant sensiblement selon la direction transversale Y. Alternativement encore, le module d'interconnexion 30 ayant cette forme parallélépipédique peut être disposé différemment, par exemple avec un angle non négligeable entre ses grandes arêtes 31 et la direction transversale Y.

Alternativement, dans un mode de réalisation non illustré, le module d'interconnexion a une autre forme, par exemple carrée, circulaire, de sorte à maximiser sa surface faisant écran aux flux d'air issus notamment de la face avant du véhicule lors de l'avancée du véhicule et/ou ayant traversé le radiateur.

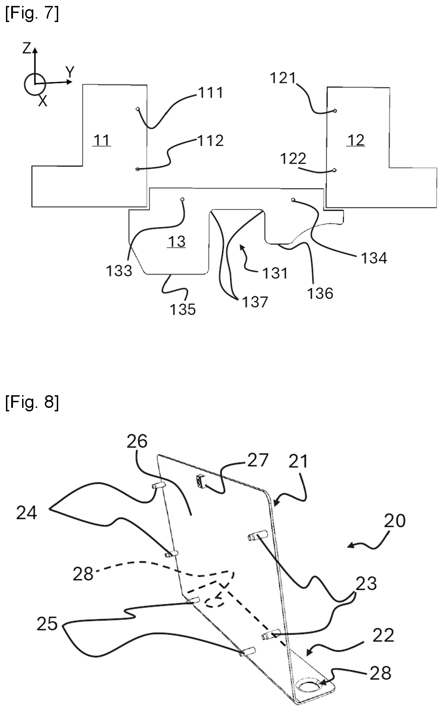

Comme illustré sur les figures 1, 2 et 3, l'agencement 2 comprend de préférence un support de fixation 20, ou moyen de fixation, permettant d'assurer la fixation du module d'interconnexion 30 par rapport au véhicule 1 au sein du compartiment moteur 100. De préférence, le support de fixation 20 s'étend principalement selon les directions transversale Y et verticale Z, en particulier en cas de module d'interconnexion 30 de forme parallélépipédique. De préférence encore, le support de fixation 20 a une forme de plaque, par exemple de plaque pliée, comme illustré sur la figure 8. Dans ce cas, le support de fixation 20 présente une forme d'équerre ou de cornière, par exemple formant un angle de l'ordre de 90 degrés entre deux ailes 21, 22 de cette équerre. De préférence, le support 20 pour la fixation du module d'interconnexion 30 présente une petite aile 22 s'étendant ou s'étendant sensiblement dans un plan transversal et longitudinal vers l'arrière du véhicule 1 et une grande aile 21 s'étendant ou s'étendant sensiblement dans un plan vertical et transversal. Dans ce cas, le support de fixation 20, via sa grande aile 21, fait écran aux flux d'air F provenant de la face avant 9 du véhicule. De préférence, l'aire de la grande aile 21 est identique, ou sensiblement identique, à l'aire du module d'interconnexion 30 c'est-à-dire au produit des arêtes 31, 32 du module 30. Dans ce cas, le support de fixation 20 vient intégralement faire écran, protéger le module d'interconnexion 30 selon la direction longitudinale avant-arrière et le module d'interconnexion ne reçoit pas les flux d'air F issus de la face avant 9. L'aile 21 du support 20 est alors agencée devant le module d'interconnexion 30.

Alternativement, dans un mode de réalisation non illustré, le support de fixation 20, notamment sa grande aile 21, a une aire bien supérieure à l'aire du produit des arêtes 31, 32 du module 30. Par exemple, l'aile 21 du support 20 n'est pas rectangulaire de sorte à maximiser son aire apte à faire écran aux flux d'air.

Le support de fixation 20 est de préférence en tôle d'acier, par exemple d'une épaisseur d'au moins 2 mm. Eventuellement, la tôle est nervurée et/ou comprend davantage de plis, par exemple des bords tombés, de sorte à rigidifier le support 20 sans augmentation de l'épaisseur de la tôle, et ainsi optimiser sa masse.

Dans le mode de réalisation illustré notamment sur la figure 5, le support de fixation 20 du module d'interconnexion 30 comprend au moins un déflecteur d'air 10 s'étendant, ou s'étendant sensiblement, dans le plan vertical et transversal.

Avantageusement, dans le mode de réalisation illustré notamment sur les figures 2 à 7, le support de fixation 20 comprend un déflecteur d'air gauche 11 s'étendant à gauche du support de fixation 20. Avantageusement, dans le mode de réalisation illustré notamment sur les figures 2, 3, 4, 5 et 7, le support de fixation 20 comprend un déflecteur droit 12 s'étendant à droite du support de fixation 20. Avantageusement, dans le mode de réalisation illustré notamment sur les figures 2, 3, 4, 5 et 7, le support de fixation 20 comprend encore un déflecteur d'air inférieur 13 s'étendant vers le bas depuis le support de fixation 20. Au total, dans le mode de réalisation illustré, le déflecteur d'air comprend ainsi trois parties 11, 12, 13 s'étendant, ou s'étendant sensiblement, dans un plan vertical et transversal.

De préférence, le déflecteur d'air 10 est fixé au support de fixation 20. Comme illustré sur les figures 4 et 8, de préférence, le support 20 comprend des vis rapportées 23, 24, 25, éventuellement soudées sur ou à travers l'aile 21, ou des tiges filetées rapportées, éventuellement soudées sur ou à travers l'aile 21. Ainsi, des systèmes de vis 23, 24, 25 et écrous 15 permettent la fixation du déflecteur 10 vis-à-vis du support 20. Plus précisément, deux vis ou tiges filetées 24 permettent d'assurer la fixation du déflecteur d'air droit 12 vis-à-vis du support 20, deux vis ou tiges filetées 23 permettent d'assurer la fixation du déflecteur d'air gauche 11 vis-à-vis du support 20, et deux vis ou tiges filetées 25 permettent d'assurer la fixation du déflecteur d'air inférieur 13 vis-à-vis du support 20. Par exemple, comme illustré sur la figure 7, le déflecteur d'air gauche 11 comprend deux trous 111, 112. Ces deux trous permettent de recevoir les deux vis ou goujons 23 pour la fixation du déflecteur 11. Par exemple, comme illustré sur la figure 7, le déflecteur d'air droit 12 comprend deux trous 121, 122. Ces deux trous permettent de recevoir les deux vis ou goujons 24 pour la fixation du déflecteur 12. Par exemple, comme illustré sur la figure 7, le déflecteur d'air inférieur 13 comprend deux trous 133, 134. Ces deux trous permettent de recevoir les deux vis ou goujons 25 pour la fixation du déflecteur 13. Comme illustré notamment sur la figure 4, les écrous 15 viennent coincer, bloquer, positionner chaque déflecteur contre une face avant 26 du support 20.

Comme illustré en particulier sur la figure 4, le déflecteur d'air gauche 11 et le déflecteur d'air droit 12 sont de préférence identiques. Plus précisément, les déflecteurs droit et gauche sont agencés avantageusement symétriquement par rapport à un plan médian M vertical et longitudinal du véhicule 1 (voir figure 1, 2 et 3 notamment). Ainsi, les déflecteurs 11, 12 peuvent être intervertis. Ainsi, les orifices 121, 122 du déflecteur 12 peuvent être utilisés pour venir coopérer avec les vis 23 du support 20 et les orifices 111, 112 du déflecteur 11 peuvent être utilisés pour venir coopérer avec les vis 24 du support 20. Dans ce cas, les entraxes et les positions des vis 24 et des vis 23 vis-à-vis du support 20 sont identiques, éventuellement symétriques par rapport au plan médian M.

Avantageusement, comme cela est particulièrement visible sur la figure 7, chaque déflecteur 11, 12 a une forme globale de L. Par exemple, le déflecteur d'air gauche 11 a une barre inférieure du L s'étendant vers la gauche et le déflecteur d'air droit 12 a une barre inférieure du L s'étendant vers la droite. Etant donnée la fonction de déviation, de réorientation de l'air provenant de la face avant 9 du véhicule en période de roulage en marche avant, la forme des déflecteurs n'est pas figée. Ainsi, d'autres formes de chaque déflecteur d'air 11, 12 venant davantage épouser des organes au sein du compartiment moteur 100 notamment, et/ou obstruer des ouvertures entre des organes, sont envisageables.

Alternativement, les déflecteurs identiques droit et gauche sont agencés symétriquement par rapport à un plan vertical et longitudinal non médian du véhicule (mode de réalisation non illustré).

Alternativement, les déflecteurs droit et gauche ne sont pas identiques et ne peuvent pas se substituer l'un à l'autre. Alternativement encore, seul un déflecteur à droite est prévu ou seul un déflecteur à gauche est prévu (mode de réalisation non illustré).

Comme illustré en particulier sur les figures 2, 3, 4 et 7, le déflecteur d'air inférieur 13 comprend une encoche non centrée 131 par rapport au plan médian M vertical et longitudinal du véhicule 1. Plus précisément, l'encoche 131 est ménagée dans, s'étend depuis, une arête inférieure 132 du déflecteur inférieur 13 (voir figure 4). L'encoche, ou entaille, ou incision 131 est ménagée vers le haut. A noter que l'arête inférieure 132 peut comprendre deux portions 135, 136, chaque portion s'étendant selon la direction transversale ou sensiblement transversale, de part et d'autre de l'encoche 131 (voir figure 7). Une portion 136 de l'arête 132 peut s'étendre au-dessus de l'autre portion 135 de l'arête 132, ou le contraire. Alternativement, les deux portions 135, 136 sont au même niveau selon la direction verticale. De préférence, comme illustré sur les figures 4, 5, 6 et 7, l'encoche 131 a une forme sensiblement rectangulaire, et comprend éventuellement des arrondis ou chanfreins 137 (voir figure 7). Par exemple, le déflecteur d'air inférieur 13 a une forme globale de U à l'envers. Alternativement, le déflecteur d'air inférieur a une autre forme, par exemple globalement carrée, globalement rectangulaire, ou une tout autre forme de sorte à épouser au mieux les organes au sein du compartiment moteur 100 notamment, et/ou à obstruer des ouvertures entre ces organes.

Chaque déflecteur d'air 11, 12, 13 est de préférence en matière plastique. Alternativement, le ou les déflecteurs peuvent être en tôle d'alliage d'aluminium ou encore en tôle d'acier.

Les déflecteurs d'air du mode de réalisation sont plans ou sensiblement plans, de type plaque, c'est-à-dire ayant une épaisseur négligeable comparée aux deux autres dimensions.

Alternativement, au moins un déflecteur d'air peut être courbé, par exemple sensiblement en forme de gouttière, notamment afin de mieux orienter les flux d'air vers une direction donnée. En cas de déflecteurs courbés, le déflecteur gauche n'est par exemple pas identique au déflecteur droit et vice versa, si bien qu'ils ne peuvent pas être intervertis. En cas de déflecteur inférieur courbé, il ne peut par exemple pas être tourné de 180 degrés pour s'adapter aux éléments de la direction du véhicule agencée à droite ou à gauche.

Comme illustré sur la figure 2, le véhicule 1 a la colonne de direction 81 agencée à gauche. Dans ce cas, le déflecteur d'air inférieur 13 est monté, agencé, dans un premier sens. Dans ce premier sens, l'encoche 131 est légèrement excentrée, décalée à droite du plan médian M. Ainsi, l'encoche non centrée 131 permet d'enjamber l'élément 82. Ainsi, l'élément 82, par exemple de type calculateur, bien qu'il ne soit pas centré par rapport au plan médian M est contourné par le déflecteur inférieur 13 grâce à son encoche 131 non centrée.

Comme illustré sur la figure 3, le véhicule 1 a la colonne de direction 81 agencée à droite. Dans ce cas, le déflecteur d'air inférieur 13 est monté, agencé, dans le deuxième sens, opposé au premier sens (retourné de 180 degrés autour d'un axe vertical). Dans ce deuxième sens, l'encoche 131 est légèrement excentrée, décalée à gauche du plan médian M. Ainsi, l'encoche non centrée 131 permet d'enjamber l'élément 82. Ainsi, l'élément 82, par exemple de type calculateur, bien qu'il ne soit pas centré par rapport au plan médian M est contourné par le déflecteur inférieur 13 grâce à son encoche 131 non centrée.

Alternativement, l'encoche 131 peut être excentrée à gauche du plan médian M alors que la direction est agencée à gauche du véhicule 1 et, respectivement, l'encoche 131 peut être excentrée à droite du plan médian M alors que la direction est agencée à droite du véhicule 1.

Eventuellement, le véhicule 1 comprend un berceau 101 et le support de fixation 20 est fixé sur ou par rapport au berceau 101 (voir figures 2 et 3).

De préférence, comme illustré sur la figure 9, le module d'interconnexion 30 comprend au moins un orifice 34, de préférence épaulé, pour la fixation du module 30 sur le support de fixation 20. Comme illustré sur la figure 8, le support 20 comprend de préférence au moins un écrou 27 rapporté, éventuellement soudé sur une face avant 26 de la grande aile 21. De préférence une vis est alors prévue pour traverser partiellement l'orifice épaulé 34 du module 30 et venir coopérer avec l'écrou 27 pour assurer la fixation du module 30 sur son support 20. De préférence, en complément, le module 30 comprend deux excroissances 38 s'étendant sensiblement verticalement depuis une face inférieure 39 du module 30. La face inférieure 39 du module 30 s'étend de préférence dans un plan transversal et longitudinal. Le support 20 comprend alors de préférence deux orifices 28 débouchant permettant de recevoir, de loger au moins partiellement, les deux extensions 38 du module 30, comme illustré sur la figure 6. Dans ce cas, par exemple le module d'interconnexion 30 est placé, positionné par rapport au support 20 en faisant coopérer, en insérant les deux extensions 38 à travers les orifices 28, et est maintenu en position sur son support 20 par une vis traversant le trou épaulé 34 du module 30 et venant se visser dans l'écrou 27. Par exemple, les excroissances 38 du module d'interconnexion 30 correspondent à des entrées et/ou sorties pour un fluide. Davantage d'excroissances et éventuellement davantage d'orifices dans le support peuvent être envisagés.

En résumé, dans le mode de réalisation illustré, la solution porte sur un support 20 offrant la double fonction de supporter le module d'interconnexion 30 tout en permettant de fixer le ou les déflecteurs d'air 11, 12, 13. La solution est particulièrement adaptée aux véhicules électriques. En effet, dans un véhicule électrique, le système de gestion thermique 3 est implanté derrière un bloc ou valise de refroidissement comprenant au moins le radiateur 35 et éventuellement au moins un autre. Ainsi, le flux d'air lié à l'avancement du véhicule 1 ayant traversé ou non le ou les radiateurs se trouve dévié par le ou les déflecteurs d'air afin d'éviter toute perturbation, dégradation, ou baisse des performances du système de gestion thermique 3. Comme illustré en particulier sur les figures 2 et 3, le flux d'air provenant de la face avant 9 se divise en plusieurs flux F vers les passages de roue 102 ou les roues 103. Ainsi, grâce aux déflecteurs d'air, les éléments du système de gestion thermiques 3 ne sont pas refroidis, en particulier par temps froid et/ou en cas de vitesse élevée du véhicule, et ne sont pas réchauffés, en particulier par temps chaud. Autrement dit, tous les composants du système de gestion thermique 3 sensibles à la température des flux d'air n'ont pas d'échange thermique avec ces flux d'air, les flux d'air provenant de la face avant 9 et du radiateur 35 étant déviés vers le bas, notamment de chaque côté. Alternativement, selon le type de véhicule et/ou les équipements du véhicule et/ou la forme et le volume du compartiment moteur 100, les déflecteurs d'air peuvent réorienter les flux vers d'autres zones, par exemple au-dessus du véhicule (en cas de capot avant équipé d'orifices par exemple) ou vers le bas, derrière ou devant les roues avant.

Ainsi, en particulier par temps froid et en cas de véhicule électrique, le système de gestion thermique 3 ne se trouve pas refroidi par les flux d'air au cours du roulage du véhicule. En cas de requête de chauffage de l'habitacle, le système de gestion thermique 3 n'a pas besoin de puiser de l'énergie électrique dans la batterie de traction et/ou propulsion 4, tout du moins en a moins besoin, pour alimenter en énergie électrique un dispositif de chauffage, par exemple utilisant une résistance électrique. Autrement dit, on économise la charge de la batterie de traction et/ou de propulsion 4 en évitant de la solliciter pour chauffer l'habitacle 5. En conséquence, on maximise l'autonomie de la batterie 4 et, a fortiori, celle du véhicule électrique le cas échéant.

Alternativement, notamment par temps très chaud, les flux d'air issus de la face avant et/ou ayant traversé le ou les radiateurs, ne participent pas à un réchauffage du système de gestion thermique. Ainsi, si une consigne de refroidissement d'un ou plusieurs éléments ou de climatisation de l'habitacle est demandée, le flux d'air chaud est dévié et ne vient pas réchauffer des éléments en cours de refroidissement.

Grâce aux déflecteurs d'air 11, 12, 13, et/ou à la forme du module d'interconnexion 30, et/ou à la forme du support, et/ou au positionnement du module d'interconnexion de sorte à s'étendre principalement selon les direction transversale et verticale, le système de gestion thermique 3, en particulier des conduits ou conduites ou tuyaux, et/ou le boîtier 37 permettant la production de froid et/ou de chaud notamment via un liquide frigorigène de type propane, sont protégés des flux d'air. Il en résulte une amélioration de l'efficacité du système de gestion thermique 3 ce qui se traduit en particulier par une économie de la consommation énergétique électrique et/ou de carburant en particulier en cas de moteur à combustion interne dédié à produire de l'électricité.

Avantageusement, le module d'interconnexion 30 est fixé sur le berceau 101, derrière la valise de refroidissement, avec le support de fixation 20 s'étendant principalement dans un plan vertical et transversal devant le module 30. Pour rappel, les déflecteurs d'air qui dévient le flux d'air sont fixés au support 20.

A noter que la forme du déflecteur inférieur 13 est conçue pour s'adapter aux emplacements des éléments de la direction 8 agencée à droite ou à gauche selon les pays de commercialisation et/ou de production des véhicules. Ainsi, pour gérer les directions à gauche et à droite, un élément de la direction, par exemple une crémaillère de direction et/ou un calculateur 82, sont symétrisés. Ainsi, il suffit de retourner le déflecteur d'air inférieur 13 de 180 degrés autour d'un axe vertical pour équiper un véhicule à direction à gauche (figure 2) par rapport à un véhicule à direction à droite (figure 3). Eventuellement, étant donné la fixation des déflecteurs d'air de préférence directement sur le support 20, des ensembles comprenant des supports avec les déflecteurs montés pour une direction à droite et des ensembles comprenant des supports avec des déflecteurs montés pour une direction à gauche peuvent être assemblés en bord de chaîne de sorte à créer des stocks (cas de production de véhicules ayant une direction à droite et de véhicules ayant une direction à gauche sur une même chaine).

En réorientant vers le bas et sur les côtés du véhicule les flux d'air issus de la face avant 9 du véhicule en marche avant, en particulier à haute vitesse, la solution offre de meilleures performances thermiques du système 3 et préserve l'énergie de la batterie 4. En outre, la solution est particulièrement économique du fait d'économies d'échelle puisque le déflecteur gauche est le même que le déflecteur droit. Ainsi, seuls deux types de déflecteurs sont conçus et fabriqués, un premier type pour les côtés droit et gauche, et un deuxième type pour le déflecteur inférieur. Pour rappel, le déflecteur inférieur 13 a la particularité de pouvoir être inversé selon qu'il s'agisse d'une direction à droite ou à gauche du véhicule, par exemple de sorte à enjamber un élément de la direction.

Du fait que les déflecteurs d'air soient fixés directement via le support de fixation 20, le module d'interconnexion 30 ne nécessite aucune modification. Cela participe à permettre une implantation simple et rapide sur un véhicule, même après la conception de l'intégralité du véhicule, seules les formes des déflecteurs étant par exemple à déterminer.

Bien que trois déflecteurs d'air 11, 12, 13 soient prévus dans le mode de réalisation pour dévier l'air et l'orienter vers les passages de roue 102, deux déflecteurs, éventuellement de forme différente, voire un seul déflecteur est envisageable également.

En remarque, la solution atteint donc l'objectif recherché d'empêcher le flux d'air entrant dans la face avant du véhicule lors du roulage d'engendrer des répercussions négatives sur le système de gestion thermique du véhicule en déviant ces flux d'air et présente l'avantage de pouvoir être utilisée pour d'autres types de véhicules motorisés, à savoir des camions ou des bus par exemple.

## Revendications

1. Agencement (2) destiné à être implanté au sein d'un compartiment moteur avant (100) d'un véhicule (1) comprenant une face avant (9), l'agencement (2) comprenant un système de gestion thermique (3) apte à chauffer et/ou à refroidir :
- une batterie de traction et/ou de propulsion (4), et/ou
- un habitacle (5) d'un tel véhicule (1), et/ou
- un train de puissance électrique (6), et/ou
- un moteur à combustion interne (7),
le système de gestion thermique (3) comprenant un module d'interconnexion (30) et au moins un radiateur (35) agencé au niveau d'une telle face avant (9), le module d'interconnexion (30) ayant une forme sensiblement parallélépipédique,
le module d'interconnexion (30) s'étendant principalement selon les directions transversale et verticale de sorte à faire écran au flux d'air (F) ayant traversé l'au moins un radiateur (35) et/ou venant d'une telle face avant (9).

2. Agencement (2) selon la revendication 1, **caractérisé en ce que** l'agencement (2) comprend un support de fixation (20) du module d'interconnexion (30), le support de fixation (20) s'étendant principalement selon les directions transversale et verticale de sorte à faire écran au flux d'air (F).

3. Agencement (2) selon la revendication précédente, **caractérisé en ce que** le support de fixation (20) du module d'interconnexion (30) comprend au moins un déflecteur d'air (10) s'étendant, ou s'étendant sensiblement, dans un plan vertical et transversal.

4. Agencement (2) selon la revendication précédente, **caractérisé en ce que** l'au moins un déflecteur d'air (10) est fixé au support de fixation (20), notamment par des systèmes vis-écrous (15).

5. Agencement (2) selon l'une des revendications 3 ou 4, **caractérisé en ce que** le support de fixation (20) comprend un déflecteur d'air gauche (11) s'étendant à gauche du support de fixation (20) et un déflecteur droit (12) s'étendant à droite du support de fixation (20).

6. Agencement (2) selon la revendication précédente, **caractérisé en ce que** le déflecteur d'air gauche (11) et le déflecteur d'air droit (12) sont identiques, notamment en étant agencés symétriquement par rapport à un plan médian (M) vertical et longitudinal d'un tel véhicule (1).

7. Agencement (2) selon l'une des revendications 3 à 6, **caractérisé en ce que** le support de fixation (20) comprend un déflecteur d'air inférieur (13) s'étendant vers le bas depuis le support de fixation (20).

8. Agencement (2) selon la revendication précédente, **caractérisé en ce que** le déflecteur d'air inférieur (13) comprend une encoche (131) non centrée par rapport à un plan médian (M) vertical et longitudinal d'un tel véhicule (1), l'encoche (131) étant ménagée dans une arête inférieure (132) du déflecteur inférieur (13) et vers le haut, notamment l'encoche (131) a une forme sensiblement rectangulaire.

9. Véhicule (1), notamment véhicule automobile, **caractérisé en ce qu'**il comprend un agencement (2) selon l'une des revendications précédentes.

10. Véhicule (1), notamment véhicule automobile, **caractérisé en ce qu'**il comprend un agencement (2) selon la revendication 8, le véhicule (1) comprenant un dispositif de direction (8) comprenant une colonne de direction (81) agencée à gauche, le déflecteur d'air inférieur (13) étant monté dans un premier sens, notamment de sorte que l'encoche (131) enjambe un élément (82) non centré du dispositif de direction (8) par rapport au plan médian (M), notamment un élément (82) de type calculateur du dispositif de direction (8).

11. Véhicule (1), notamment véhicule automobile, **caractérisé en ce qu'**il comprend un agencement (2) selon la revendication 8, le véhicule (1) comprenant un dispositif de direction (8) comprenant une colonne de direction (81) agencée à droite, le déflecteur d'air inférieur (13) étant monté dans un deuxième sens, notamment de sorte que l'encoche (131) enjambe un élément (82) non centré du dispositif de direction (8) par rapport au plan médian (M), notamment un élément (82) de type calculateur du dispositif de direction (8).
